# EUROPEAN PATENT APPLICATION

(11) **EP 1 634 779 A1**
(43) Date of publication of application: **15.03.2006**
(21) Application number: 04734351.2
(22) Date of filing: 21.05.2004
(51) Int. Cl.: B60R 21/26

(54) **INFLATOR**

(30) Priority: 28.05.2003 JP 2003150256
(71) Applicant: DAICEL CHEMICAL INDUSTRIES, LTD., Sakai-shi, Osaka 590-8501 (JP)
(72) Inventor: KATSUDA, Nobuyuki, Ohtsu-ku, Himeji-shi, Hyogo (JP); MATSUDA, Naoki, Hyogo (JP)
(74) Representative: Grünecker, Kinkeldey, Stockmair & Schwanhäusser Anwaltssozietät
(86) International application number: PCT/JP2004/006942
(87) International publication number: WO 2004/106123

(57) **Abstract**

An inflator suitable for a curtain air bag is provided.

The inflator has two igniters 36 and 46 and gas discharge ports 34 formed on one end side. A first rupturable plate 38 is broken by activation of the first igniter 36 and pressurized gas is discharged from gas discharge ports 34, and a second rupturable plate 48 is broken by activation of a second igniter 46 and combustion gas is discharged from gas discharge ports 34. Accordingly, the air bag can be inflated instantly and inflation can be maintained.

## Description

### Field of the Invention

The present invention relates to an inflator suitable as an inflator for a curtain air bag installed in an automobile in particular.

### Background Art

Various kinds of inflators such as an inflator for an air bag of a driver side, an inflator for an air bag of a front passenger side, an inflator for a side air bag, an inflator for a curtain air bag, an inflator for an knee-bolster, an inflator for an inflatable seat belt, an inflator for a tubular system and an inflator for a pretensioner are known as an inflator for inflation type security systems of a motor vehicle, which can protect a vehicle occupant most suitably in accordance with a seat location in a vehicle such as a driver side, a front passenger side and so on.

Among these inflators, an inflator for a curtain air bag is to instantly inflate and develop a curtain-like air bag having thickness of a few centimeters over a window of a vehicle when a vehicle receives the impact from a lateral direction.

An inflator for a curtain air bag is demanded to maintain an inflated state for about a few seconds on the assumption that a vehicle rolls in a lateral direction, in addition to inflating a curtain-like air bag instantly. Further, since installation location thereof is limited as compared to an inflator for an air bag of a driver side or a front passenger side, there is a strong request for downsizing the inflator.
Patent Document 1: WO-A No. 97/08020
Patent Document 2: WO-A No. 97/32753
Patent Document 3: US-B No. 5,794,973,
Patent Document 4: US-B No. 6,039,348

### Disclosure of the Invention

### Problem to be Solved by the Invention

An object of the present invention is to provide an inflator especially suitable as an inflator for a curtain air bag, in which a direction of inflation and development is controlled easily and that inflation can be maintained for a long time.

### Means to Solve the Problem

The present invention provides, as a means to solve the problem, an inflator housing comprising a cylindrical inflator housing, an ignition means chamber connected to one end of the cylindrical inflator housing and a gas generator connected to the other end of the cylindrical inflator housing,
wherein the ignition means chamber has an igniter and a gas discharge port, and a first rupturable plate closes between the inside of the inflator housing and the ignition means chamber,
the gas generator has an igniter and a gas generating agent, and a second rupturable plate closes between the inside of the inflator housing and the gas generator, and
pressurized gas is charged under high pressure inside the inflator housing.

In the inflator of the present invention, since gas discharge ports are arranged only on one end portion side, it is suitable for a case of inflating an air bag only in one direction.

And in this invention, since pressurized gas and combustion gas from a gas generating agent are utilized as an inflation medium for an air bag, in a crash of a vehicle, an air bag can be inflated and developed instantly by the pressurized gas and also, inflation and development time of the air bag can be maintained for about a few (six to seven) seconds by the combustion gas generated by the gas generator.

In this invention, a cap can be installed inside the inflator housing such that it covers the second rupturable plate from the inner side of the inflator housing, and the cap has a vent having such a size that can allow gas to flow therethorugh and catch broken pieces of the rupturable plate.

The inflator of the present invention can be applied to well known inflators for air bags, for example, an inflator for an air bag of a driver side, an inflator for an air bag of a front passenger side, an inflator for a side air bag, an inflator for a curtain air bag, and in particular, it is suitable as an inflator for a curtain air bag.

### Effect of the Invention

In the inflator of the present invention, since gas discharge ports are arranged only on one end, it is suitable for a case of inflating and developing an air bag only in one direction. Further in this invention, since pressurized gas and combustion gas from a gas generating agent are utilized as an inflation medium for an air bag, an air bag can be inflated and developed instantly, and also, inflation and development time of the air bag can be maintained for about a few (six to seven) seconds by the combustion gas generated by the gas generating agent. Accordingly, it is suitable as an inflator for a curtain air bag in particular.

### Brief Description of the Drawings

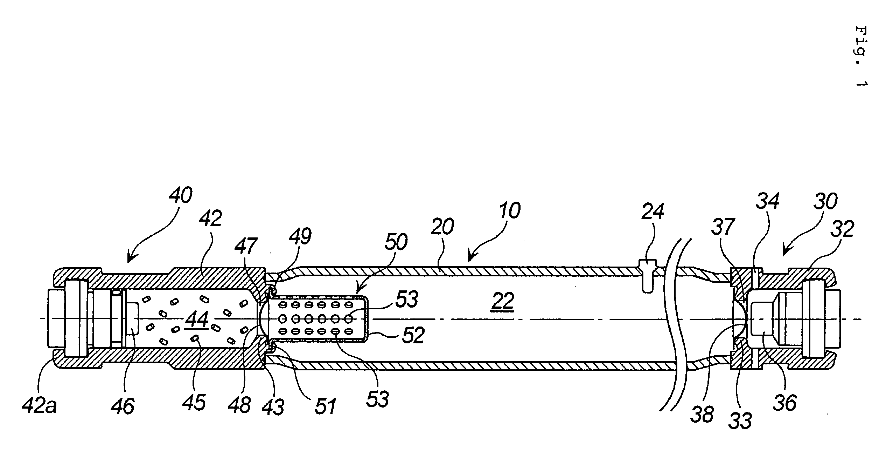

Fig.1 is an axial cross section of an inflator of the present invention.

### Description of Numerals

- 10: inflator
- 20: inflator housing
- 30: ignition means chamber
- 36: first igniter
- 38: first rupturable plate
- 40: gas generator
- 45: gas generating agent
- 46: second igniter
- 50: cap

### Most Preferred Embodiment of the Invention

An embodiment of an inflator of the present invention will be explained according to Fig.1. Fig.1 is an axial cross section of an inflator.

An inflator 10 comprises a tubular inflator housing 20 made of highly pressure resistant metal such as steel, an ignition means chamber 30 connected to one end and a gas generator 40 connected to the other end.

In Fig. 1, the inflator housing 20, the ignition means chamber 30 and the gas generator 40 are formed separately, but these members can be formed as a single member (for example, the inflator housing forms the whole outer shell) and each portion can be separated by a partition wall and a rupturable plate.

The inner space 22 of the inflator housing 20 is kept airtight state, and argon, helium, nitrogen and so on is charged under high pressure (about 70, 000 kPa at the maximum pressure) .

An existing gas cylinder can be used as the inflator housing 20, which can be manufactured by swaging a pipe. In the inflator 10 of Fig. 1, ends of the inflator housing 20 are connected to the ignition means chamber 30 and the gas generator 40, rupturable plates are arranged to be able to keep airtight state, and then, pressurized gas is charged through gap in a sealing pin 24 inserted in a small hole, and thereafter, the inflator housing 20 is welded at the portion of the sealing pin 24.

As to the ignition means chamber 30, its outer shell is formed by the ignition means chamber housing 32. In the ignition means chamber housing 32, plural gas discharge ports 34 for ejecting pressurized gas outside are arranged, and a first igniter 36 provided with an priming is accommodated inside. The first igniter 36 is connected to a power source (battery of a car) via a connector and a lead wire.

In the first passage 37 between the inflator housing 20 (inner space 22) and the ignition means chamber 30, the first rupturable plate 38 made of stainless is arranged. The inside of the ignition means chamber 30 is under normal pressure since the first passage 37 is closed with the first rupturable plate 38. The circumferential edge portion of the first rupturable plate 38 is fixed by welding to a first circular portion 33 made of a radial projection of the inner surface in the ignition means chamber housing 32.

As to the gas generator 40, an outer shell is formed by the gas generator housing 42. In the gas generator housing 42, one end opening portion is connected to the inflator housing 20, the second igniter 46 is embedded from the other end opening portion, and the second igniter 46 is fixed by crimping circumferential edge 42a of the other end opening portion.

The remaining space in the gas generator housing 42 except the second igniter 46 forms a combustion chamber 44 in which a gas generating agent 45 for generating combustion gas is loaded. As to the gas generating agent 45, generation time of gas can be made longer by reducing a total surface area (for example, by using one having the same shape as that shown in _{F}ig.1 but a larger size, a total surface area can be reduced even when the same quantity is loaded) or by selecting composition having a low burning rate.

In the second passage 47 between the inflator housing 20 (inner space 22) and the gas generator 40, the second rupturable plate 48 made of stainless is arranged. The inside of the gas generator 40 is under normal pressure since the second passage 47 is closed with the second rupturable plate 48. The circumferential edge portion of the second rupturable plate 48 is fixed by welding to a second circular portion 43 made of a radial projection of the inner surface in the gas generator housing 42.

A cap 50 is installed inside the inflator housing 22 such that it completely covers the second rupturable plate 48 and the second passage 47.

The cap 50 has a flange portion 51 in an opening portion, its bottom surface 52 is closed, and on circumferential surface, it has plural vents 53 having such a size that can allow gas to flow therethrough and catch broken pieces of the rupturable plate.

The cap 50 is fixed to the gas generator housing 42 at the flange portion 51 by crimping a circular protruding portion 49 arranged on a portion of the gas generator housing 42 which faces the inflator housing 20.

The inflator housing 20 and the ignition means chamber housing 32, and the inflator housing 20 and the gas generator housing 42 are connected by welding.

Next, operation of the inflator 10 shown in Fig. 1 applied to a curtain air bag is explained.

By the way, if a degree of the impact which a vehicle has received is small, an inflation time of a curtain air bag can be short. Accordingly, only the first igniter 36 is activated and the curtain air bag is inflated and developed only by pressurized gas. However, if a degree of the impact which a vehicle has received is serious, the first igniter 36 and the second igniter 46 activate simultaneously to develop and inflate a curtain air bag by both of pressurized gas and combustion gas. And, if the impact which a vehicle has received is moderate, the first igniter 36 is activated, and then, the second igniter 46 is activated a little later. The following is the description concerning a case in which the first igniter 36 and the second igniter 46 are activated with time lag.

When a vehicle receives an impact from a lateral direction, the first rupturable plate 38 is broken by activation of the first igniter 36, and pressurized gas in the inner space 22 flows through the first passage 37 into the ignition means chamber 30, is ejected from a gas discharge port 34 to inflate and develop a curtain air bag. In this way, an air bag can be instantly inflated and developed in a narrow space between a vehicle occupant and a side surface portion of the vehicle.

At this time, since the gas discharge ports 34 are arranged only at one end portion, an inflation direction of the curtain air bag can be controlled easily in one direction. In this case, since temperature of pressurized gas rapidly goes down when it is released from high pressure state, an air bag is inflated at high speed, but inflation is maintained for a short time. However, it is suitable for a curtain air bag system, which has to develop and inflate an air bag instantly in a narrow space between the vehicle occupant and a side surface portion of the vehicle, that the first igniter 36 only is activated first and pressurized gas can be released instantly. And, it can be applied to a combination of a curtain air bag and a side air bag.

Subsequently, by activation of the second igniter 46, a gas generating agent 45 in a combustion chamber 44 is burnt to generate combustion gas, and the second rupturable plate 48 is broken by increase in internal pressure. And the combustion gas passes through a vent 53 of the cap 50, flows into the inner space 22, further goes through the first passage 37 and the ignition means chamber 30, and is discharged from a gas discharge port 34 to maintain inflation and development time of the curtain air bag for about a several seconds. At this time, by adjusting a total surface area or composition (burning rate) of the gas generating agent 45, inflation and development time of the curtain air bag can be made still longer.

Incidentally, even when pieces are generated by rupture of the second rupturable plate 48, the pieces are caught by a vent 53 in the cap 50, and therefore, pieces, which moves with outflow of combustion gas, never closes the gas discharge port 34 nor are ejected into the air bag.

## Claims

1. An inflator housing comprising a cylindrical inflator housing, an ignition means chamber connected to one end of the cylindrical inflator housing and a gas generator connected to the other end of the cylindrical inflator housing,
wherein the ignition means chamber has an igniter and a gas discharge port, and a first rupturable plate closes between the inside of the inflator housing and the ignition means chamber,
the gas generator has an igniter and a gas generating agent, and a second rupturable plate closes between the inside of the inflator housing and the gas generator, and
pressurized gas is charged under high pressure inside the inflator housing.

2. The inflator according to claim 1, wherein a cap is installed inside the inflator housing such that it covers the second rupturable plate from the inner side of the inflator housing, and the cap has a vent having such a size that can allow gas to flow therethrough and catch broken pieces of the rupturable plate.

3. The inflator according to claim 1 or 2, which is for a curtain air bag.
